# EUROPÄISCHE PATENTSCHRIFT

(11) **EP 1 254 623 B1**
(45) Veröffentlichungstag und Bekanntmachung des Hinweises auf die Patenterteilung: **26.01.2005**
(21) Anmeldenummer: 02009785.3
(22) Anmeldetag: 30.04.2002
(51) Int. Cl.: A47J 39/00, A47F 10/00

(54) **Garmodulsystem**
Modular cooking system
Système de cuisson modulaire

(30) Priorität: 30.04.2001 DE 10121213
(43) Veröffentlichungstag der Anmeldung: 06.11.2002
(60) Teilanmeldung: 03013546.1
(73) Patentinhaber: Rational AG, 86899 Landsberg/Lech (DE); FRIMA S.A., 68271 Wittenheim Cedex (FR)
(72) Erfinder: Gluck, Pascal, 68100 Mulhouse (FR); Michineau, Serge, 68190 Ensisheim (FR); Wiedemann, Peter, 86836 Klosterlechfeld (DE); Wagner, Stefan, 68127 Oberhergheim (FR)
(74) Vertreter: Weber-Bruls, Dorothée, Dr.

(56) Entgegenhaltungen:
- WO-A-00/76383
- DE-U- 29 911 846
- US-A- 3 902 773
- US-A- 5 245 150
- US-A1- 2002 007 737

## Beschreibung

Die Erfindung betrifft ein Garmodulsystem mit einer Vielzahl von Garmodulen, umfassend eine Halterung, an der die Garmodule lösbar sowie verschiebbar anbringbar sind.

Es ist eine Vielzahl unterschiedlicher Garmodule im Stand der Technik bekannt, in denen Speisen garbar, lagerbar, kühlbar, transportierbar oder regenerierbar sind. Aufgrund der unterschiedlichen Anforderungen an die Behandlung von Speisen sind in herkömmlichen Großküchen eine Vielzahl von unterschiedlichen Gargeräten angeordnet. So finden sich in einer Großküche heutzutage zumindest ein sogenannter Kombidämpfer, bei dem mit Heißluft und/oder Dampf gearbeitet wird, eine Friteuse, eine Grillplatte, eine Kochstelle für Rührgut, ein Mikrowellenofen, ein Kühlschrank und eine Vielzahl von Lagerregalen, mehr oder weniger unabhängig voneinander. Solch eine Anordnung einer Vielzahl von unterschiedlichen Garmodulen fordert einen großen Platz und erschwert einem Koch die Koordinierung bei der Zubereitung einer Vielzahl von Speisen.

Ein Hintereinander-Anordnen von Garmodulen, entlang eines Förderbandes, zum schrittweisen Behandeln bzw. Garen von Speisen ist im Stand der Technik gut bekannt, siehe, zum Beispiel, US 5,826,496.

Aus der DE 299 11 846 U1 ist eine Vorrichtung zur Ausgabe, Zubereitung und Präsentation von Speisen und Getränken mit Aufnahmemöglichkeiten von Funktionsmodulen, wie z.B. Kochgeräten oder Essensbehältern, bekannt. Die Aufnahmemöglichkeiten werden dabei von horizontal oder vertikal verstellbaren Platten dargeboten, die zudem als Arbeitsplatten Verwendung finden und/oder beheizbar bzw. kühlbar sein. Die Vorrichtung kann mobil und optional mit einer Dunstabzugshaube ausgeführt sein.

In der DE 33 39 612 A1 wird ein Mehrzweckofen mit mindestens einem Brenner für vorwiegend gastronomische Zwecke offenbart, der eine Vielzahl von Garprozessen, wie z.B. Kochen, Backen und/oder Räuchern, erlaubt. Hierzu sind im Ofen drehbare Kränze angeordnet, die entweder eine Platte zum Garen von Speisen oder eine Räucherkammer beherbergen. Wahlweise kann ein Grillrost installiert werden, oder die Kränze können mit einer Abdeckung versehen werden, um dem Entweichen der Hitze entgegenzuwirken.

Der US 3,797,375 ist ein Ofen bzw. Herd zu entnehmen, der in seiner Oberseite zumindest eine wannenförmige Vertiefung zur Aufnahme von einer Vielzahl von austauschbaren Kochutensilien, wie z.B. Grillrost, Drehspieß, Kuchenblech, Kochplatte usw., sowie Heizelementen aufweist. Zudem weist der Ofen bzw. Herd eine Absaugvorrichtung für entstandene Frasen sowie zur Bereitstellung einer erzwungenen Luftströmung zwecks Abführung überschüssiger Hitze auf.

Aus der US 3,902,773 ist eine Archivierungsvorrichtung für Gegenstände, wie z.B. Büroakten, in Form eines Lagerschranks bekannt, in dem mehrere Ablagefächer für Gegenstände in Speicherzellen angeordnet sind. Diese Ablagefächer sind über einen Kettenantrieb auf Höhe eines Arbeitstisches fahrbar, wo die Ablagefächer über eine geeignete Auszieheinrichtung aus den Speicherzellen gezogen und auf dem Arbeitstisch zugänglich dargeboten werden.

Allgemein nachteilig ist dem vorab beschriebenen Stand der Technik, daß entweder ein erhöhter Platzbedarf von Nöten ist oder aber kein ergonomisches Arbeiten für eine Vielzahl von zu überwachenden Garprozessen gewährleistet wird.

Aus der WO 00/76383 A1 ist ein Systemträger zur Aufnahme von zumindest einem Behälter und/oder zumindest einem als einsetz- oder einschiebbares Elektrogerät konzipierten Koch-, Warmhalte- oder Kühlgeräts, das in dem Systemträger in wählbarer Höhe anbringbar ist und über eine Steckvorrichtung an einer Elektroinstallation anschließbar ist, die wiederum zur Stromversorgung des Elektrogeräts an das Stromnetz anschließbar ist, bekannt. Nachteilig dabei ist, daß ausschließlich beim Anschließen eines Elektrogerätes an den bekannten Systemträger die Höhe wählbar ist, jedoch nach Anbringung eine Veränderung der Höhe, insbesondere in Abhängigkeit vom Garverlauf, nicht mehr möglich ist. Zudem wird lediglich ein Freiheitsgrad bei Anbringung an den Systemträger pro Elektrogerät zur Verfügung gestellt, was den Einsatzbereich erheblich beschränkt.

Aufgabe der vorliegenden Erfindung ist es daher, das gattungsgemäße Garmodulsystem mit einer Vielzahl von Garmodulen derart weiterzuentwickeln, daß es die Nachteile des Stands der Technik überwindet, insbesondere auf platzsparende Weise einen übersichtlichen, an die jeweils zuzubereitenden Speisen beim Zubereiten derselben anpaßbaren Aufbau liefert, der einem Koch die Arbeit erleichtert.

Diese Aufgabe wird dadurch gelöst, daß die Halterung einen insbesondere säulenartigen Träger umfaßt, an dem die Garmodule frei zugänglich anbringbar und relativ zu dem die Garmodule verfahrbar und/oder verschwenkbar und/oder verdrehbar sind, wobei Speisen in den Garmodulen garbar, lagerbar, kühlbar, transportierbar und/oder regenerierbar sind.

Dabei ist bevorzugt vorgesehen, daß die Garmodule zumindest teilweise übereinander, nebeneinander und/oder hintereinander angeordnet sind, wobei vorzugsweise jeweils zumindest ein Garmodul in ergonomischer Arbeitshöhe für eine Bedienperson angeordnet ist.

Eine besondere Ausführungsform der Erfindung ist dadurch gekennzeichnet, daß zumindest ein Teil der Garmodule nach Art eines Paternosters relativ zur Halterung über eine Führung verfahrbar ist.

Zudem kann ein erfindungsgemäßes Garmodulsystem dadurch gekennzeichnet sein, daß die Garmodule längst zumindest zweier Seiten des Trägers anbringbar sind.

Ferner wird mit der Erfindung vorgeschlagen, daß die Halterung fahrbar, auseinander fahrbar und/oder auseinander klappbar ist, wobei insbesondere die Säule teleskopartig ausgeformt ist.

Ausführungsformen der Erfindung können gekennzeichnet sein durch zumindest eine Abzugshaube, verbunden mit oder integriert in die Halterung.

Auch kann erfindungsgemäß vorgesehen sein, daß jedes Garmodul über zumindest eine Einrastverbindung, zumindest eine Klippverbindung, zumindest eine Steckverbindung, zumindest eine Schiene, zumindest einen Gelenkarm, zumindest eine Gewindespindel und/oder zumindest eine Feder mit der Halterung, insbesondere einer Führung an der Halterung, vorzugsweise verriegelbar, verbindbar ist.

Erfindungsgemäße Ausführungsformen können auch dadurch gekennzeichnet sein, daß zumindest ein Teil der Garmodule jeweils einen Deckel aufweist, der vorzugsweise durch Verschieben oder Verfahren entlang der Halterung öffenbar bzw. schließbar ist.

Ferner wird erfindungsgemäß vorgeschlagen, daß zumindest ein Anschluß für eine Wasserleitung, Gasleitung, Stromleitung, Datenleitung und/oder Telefonleitung an der Halterung vorzugsweise der Säule, vorzusehen.

Dabei kann vorgesehen sein, daß zumindest ein Teil der Garmodule beim Anbringen an die Halterung automatisch mit zumindest einem Anschluß in Wirkverbindung kommen.

Schließlich sind bevorzugte erfindungsgemäße Ausführungsformen gekennzeichnet durch zumindest eine Bedienleiste, zumindest eine Steuer- und/oder Regeleinheit, zumindest eine Anzeigeeinheit, zumindest eine Eingabeeinheit und/oder zumindest eine Ausgabeeinheit, vorzugsweise integriert in die Säule und mit jedem Garmodul in Wirkverbindung bringbar.

Der Erfindung liegt somit die Erkenntnis zugrunde, daß eine Vielzahl von Garmodulen wahlweise an eine Halterung in übersichtlicher, platzsparender und für einen Koch freizugänglicher Weise lösbar anbringbar ist, nach Art eines Baukasten-Prinzips. Somit ist sichergestellt, daß die Garmodule in Anpassung an die jeweiligen Bedürfnisse einer Speisenproduktion beliebig zusammenstellbar und an eine Halterung andockbar sind. Zudem kann der jeweils von einem Koch zu bedienende Garmodul auf eine ergonomische Arbeitshöhe für den Koch gebracht werden, was nicht nur die körperliche Belastung des Kochs reduziert, sondern auch Arbeitszeit einspart. Die Garmodule können dabei speziell für eine Garaufgabe ausgebildet oder multifunktional für unterschiedliche Garaufgaben verwendbar sein. Nach dem Garen können die Speisen in den Garmodulen gelagert, gekühlt, transportiert oder regeneriert werden, ohne daß das Gargut den Garmodul verlassen muß, da die Garmodule wunschweise über die Halterung bewegbar sowie von der Halterung abdockbar sind. Bei Nichtgebrauch eines Garmodules kann dasselbe abgestellt werden.

Weitere Merkmale und Vorteile der Erfindung ergeben sich aus der nachfolgenden Beschreibung, in der zwei Ausführungsbeispiele der Erfindung anhand schematischer Zeichnungen beispielhaft erläutert sind. Dabei zeigt:
- Fig. 1: eine perspektivische Ansicht eines ersten erfindungsgemäßen Garmodulsystems; und
- Fig. 2: eine Vorderansicht eines zweiten erfindungsgemäßen Garmodulsystems.

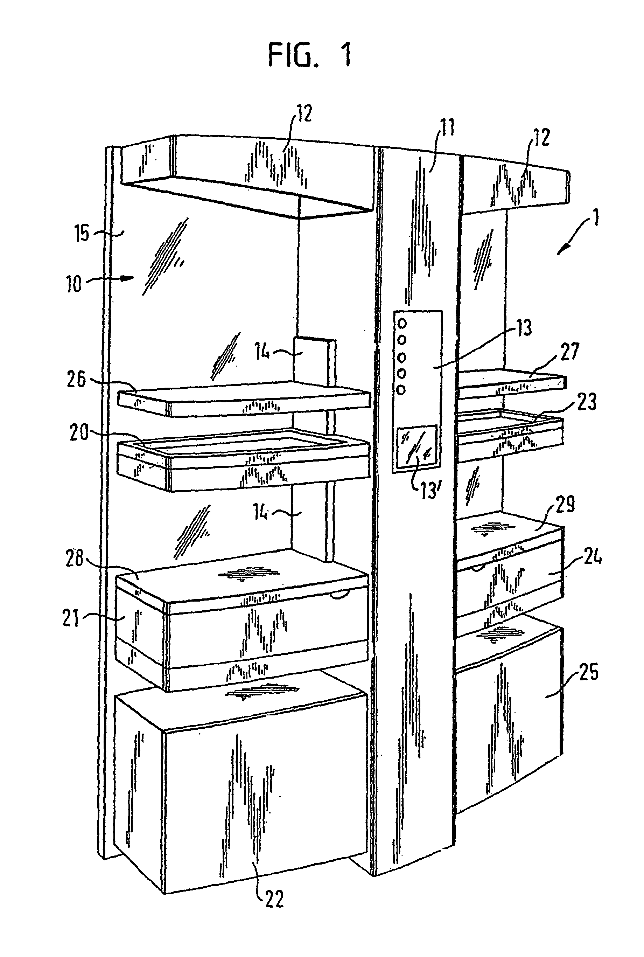

Wie der Figur 1 zu entnehmen ist, umfaßt ein erfindungsgemäßes Garmodulsystem 1 eine Halterung 10, die ihrereseits eine Säule 11 in Verbindung mit zwei Abzugshauben 12 am oberen Ende, nicht gezeigten Rollen am unteren Ende, einer Bedienleiste 13 und ein Display 13' in ihrer Mitte sowie Führungen 14 längs zweier Seitenwände und eine Rückwand 15 umfaßt. An die Halterung 10 sind über die Schienen 14 in ihrer Höhe verstellbar verschiedene Garmodule 20 - 25 andockbar. Bei den Garmodulen kann es sich, beispielsweise, um Grillplatten 20, 23, Friteusen 21, 24 und Lagerbehälter 22 und 25 handeln. Dabei sind die Grillplatten 20, 23 sowie Friteusen 21, 24 jeweils mit einem längs der Schienen 14 zum Öffnen und Schließen verfahrbaren Deckel 26 - 29 ausgerüstet.

Je nach Speisenproduktion können die Garmodule 20 - 25 auf einfache Weise ausgewechselt werden.

Die Garmodule 20 - 25 sind mit einer gemeinsamen, nicht gezeigten Regeleinheit verbunden, die ihrerseits wiederum mit der Bedienleiste 13 verbunden ist. So können über die Bedienleiste 13 Befehle an die verschiedenen Garmodule 20 - 25 weitergeleitet werden. Aber auch eine externe Regelung von Garabläufen durch Ansteuerung der Regeleinheit über eine nicht gezeigte Daten- und/oder Telefonleitung ist möglich.

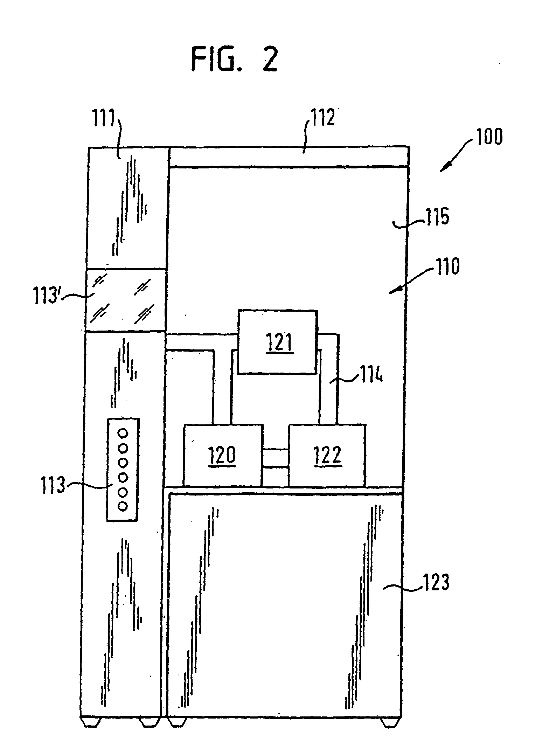

In Figur 2 ist ein weiteres erfindungsgemäßes Garmodulsystem 100 mit einer Halterung 110 dargestellt, die eine Säule 111 mit einer Abzugshaube 112, einer Bedienleiste 113 sowie einem Display 113' aufweist. Mit der Säule 111 steht ferner eine Führung 114 vor einer Rückwand 115 in Wirkverbindung, an der Garmodule 120 - 122 oberhalb eines weiteren Garmoduls 123 verdrehbar angebracht sind.

Mit einem Aufbau gemäß Figur 2 ist es möglich, gleichzeitig drei Speisen in den Garmodulen 120 - 122 zuzubereiten, wobei das jeweils von einem Koch zu bedienende Garmodul 120 oder 122 in eine ergonomische Arbeitshöhe für den Koch über die Führung 14 nach Art eines Paternosters hineinfahrbar ist, während das weitere Garmodul 121 sich in einer Position befindet, in der ein Garen technisch möglich ist, aber die für den Koch ungünstig erreichbar ist. Die Bewegung der Garmodule 120 - 122 kann manuell, halb- oder vollautomatisch erfolgen.

Während des kompletten Garvorgangs kann über die Bedienleiste 113 das Garverfahren beeinflußt werden, beispielsweise in Abhängigkeit der Ausgabe des Displays 113'. Nach Abschluß des Garens in einem der drei Garbehälter 120 - 122 kann die entsprechend fertig gegarte Speise in den Garmodul 123 zum Warmhalten gelagert werden.

Den Figuren ist deutlich die Kompaktheit eines durch ein erfindungsgemäßes Garmodulsystem ermöglichten neuen Küchenkonzepts zu entnehmen, bei dem eine Vielzahl von Garmodulen, für einen Koch frei zugänglich, auf kleinstem Raum, beliebig variierbar, auch noch beim Garen bewegbar, anordbar ist.

Die in der vorstehenden Beschreibung, den Ansprüchen sowie den Zeichnungen offenbarten Merkmale der Erfindung können sowohl einzeln als auch in jeder beliebigen Form für die Verwirklichung der Erfindung in ihren verschiedenen Ausführungsformen wesentlich sein.

### Bezugszeichenliste

- 1: Garmodulsystem
- 10: Halterung
- 11: Säule
- 12: Abzugshaube
- 13: Bedienleiste
- 13': Display
- 14: Führung
- 15: Rückwand
- 20 - 25: Garmodul
- 26 - 29: Deckel

- 100: Garmodulsystem
- 110: Halterung
- 111: Säule
- 112: Abzugshaube
- 113: Bedienleiste
- 113': Display
- 114: Führung
- 115: Rückwand
- 120 - 123: Garmodul

## Patentansprüche

1. Garmodulsystem (1; 100) mit einer Vielzahl von Garmodulen (20-25; 120-123), umfassend eine Halterung (10; 110), an der die Garmodule (20-25; 120-123) bewegbar anbringbar sind, **dadurch gekennzeichnet, daß**
die Halterung (10; 100) einen, insbesondere säulenartigen, Träger (11; 111) umfaßt, an dem die Garmodule (20-25; 120-123) längst zumindest zweier Seiten frei zugänglich anbringbar und relativ zu dem die Garmodule (20-25; 120-123) verfahrbar und/oder verschwenkbar und/oder verdrehbar sind, wobei die Halterung (10; 110) verfahrbar, auseinander fahrbar und/oder auseinander klappbar ist; und Speisen in den Garmodulen (20-25; 120-123) garbar, lagerbar, kühlbar, transportierbar und/oder regenerierbar sind.

2. Garmodulsystem nach Anspruch 1, **dadurch gekennzeichnet, daß**
die Garmodule (20-25; 120-123) zumindest teilweise übereinander, nebeneinander und/oder hintereinander angeordnet sind, wobei vorzugsweise jeweils zumindest ein Garmodul (20, 23; 120, 122) in ergonomischer Arbeitshöhe für eine Bedienperson angeordnet ist.

3. Garmodulsystem nach Anspruch 1 oder 2, **dadurch gekennzeichnet, daß**
zumindest ein Teil der Garmodule (120-122) nach Art eines Paternosters relativ zur Halterung (110) über eine Führung (114) verfahrbar ist.

4. Garmodulsystem nach einem der vorangehenden Ansprüche, **dadurch gekennzeichnet, daß**
die Säule teleskopartig ausgeformt ist.

5. Garmodulsystem nach einem der vorangehenden Ansprüche, **gekennzeichnet durch** zumindest eine Abzugshaube (12; 112), verbunden mit oder integriert in die Halterung (10; 110).

6. Garmodulsystem nach einem der vorangehenden Ansprüche, **dadurch gekennzeichnet, daß**
jedes Garmodul (20-25; 120-123) über zumindest eine Einrastverbindung, zumindest eine Klippverbindung, zumindest eine Steckverbindung, zumindest eine Schiene, zumindest einen Gelenkarm, zumindest eine Gewindespindel und/oder zumindest eine Feder mit der Halterung (10; 110), insbesondere einer Führung (14; 114) an der Halterung (10; 110), vorzugsweise verriegelbar, verbindbar ist.

7. Garmodulsystem nach einem der vorangehenden Ansprüche, **dadurch gekennzeichnet, daß**
zumindest ein Teil der Garmodule (20, 21, 23, 24) jeweils einen Deckel (26-29) aufweist, der vorzugsweise durch Verschieben oder Verfahren entlang der Halterung (10) öffenbar bzw. schließbar ist.

8. Garmodulsystem nach einem der vorangehenden Ansprüche, **gekennzeichnet durch** zumindest einen Anschluß für eine Wasserleitung, Gasleitung, Stromleitung, Datenleitung und/oder Telefonleitung an der Halterung (10; 110), vorzugsweise der Säule (11; 111).

9. Garmodulsystem nach Anspruch 8, **dadurch gekennzeichnet, daß**
zumindest ein Teil der Garmodule beim Anbringen an die Halterung automatisch mit zumindest einem Anschluß in Wirkverbindung kommt.

10. Garmodulsystem nach einem der vorangehenden Ansprüche, **gekennzeichnet durch** zumindest eine Bedienleiste (13; 113), zumindest eine Steuer- und/oder Regeleinheit, zumindest eine Anzeigeeinheit (13', 113'), zumindest eine Eingabeeinheit und/oder zumindest eine Ausgabeeinheit, vorzugsweise integriert in die Säule (11; 111) und mit jedem Garmodul (20-25; 120-123) in Wirkverbindung bringbar.

## Claims

1. A modular cooking system (1; 100) with a number of cooking modules (20 - 25; 120 - 123) and comprising a holder (10; 110) on which the cooking modules (20 - 25; 120 - 123) can be movably disposed, **characterised in that**
the holder (10; 100) comprises an in particular column-like support (11; 111) on which the cooking modules (20 - 25; 120 - 123) can be disposed so as to be freely accessible along at least two sides and moved and/or pivoted and/or rotated relative to the support, wherein the holder (10; 110) can be moved, taken apart and/or unfolded, and food can be hooked, stored, cooled, transported and/or regenerated in the cooking modules (20 - 25; 120 - 123).

2. A modular cooking system according to claim 1, **characterised in that** the cooking modules (20 - 25; 120 - 123) are disposed at least partly above, side by side and/or behind one another, wherein preferably at least one cooking module (20, 23; 120, 122) at a time can be disposed at an ergonomic working height for an operator.

3. A modular cooking system according to claim 1 or 2, **characterised in that** at least some of the cooking modules (120 - 122) are movable like an endless chain relative to the holder (110) via a guide (114).

4. A modular cooking system according to any of the preceding claims, **characterised in that** the column is telescopic.

5. A modular cooking system according to any of the preceding claims, **characterised by** at least one extractor hood (12; 112) connected to or incorporated in the holder (10; 110).

6. A modular cooking system according to any of the preceding claims, **characterised in that** each cooking module (20 - 25; 120 - 123) is connectable, preferably lockably, to the holder (10; 110) by at least one engagement connection, at least one clip connection, at least one plug connection, at least one rail, at least one articulated arm, at least one threaded spindle and/or at least one spring, particularly of a guide (14; 114).

7. A modular cooking system according to any of the preceding claims, **characterised in that** at least some of the cooking modules (20, 21, 23, 24) each have a lid (26 - 29) which can be opened or closed preferably by sliding or moving along the holder (10).

8. A modular cooking system according to any of the preceding claims, **characterised by** at least one connection for a water pipe, gas pipe, current conductor, data line and/or telephone line to the holder (10; 110), preferably to the column (11; 111).

9. A modular cooking system according to claim 8, **characterised in that** at least some of the cooking modules are automatically operatively connected to at least one connection when attached to the holder.

10. A modular cooking system according to any of the preceding claims, **characterised by** at least one control panel (13; 113), at least one open-loop and/or closed-loop control unit, at least one display unit (13', 113'), at least one inputting unit and/or at least one outputting unit, preferably incorporated in the column (11; 111), and adapted to be brought into operative connection with each cooking module (20 - 25; 120 - 123).

## Revendications

1. Système de cuisson modulaire (1 ; 100) comprenant une pluralité de modules de cuisson (20 à 25 ; 120 à 123), comprenant une fixation (10 ; 110), sur laquelle les modules de cuisson (20 à 25 ; 120 à 123) sont susceptibles d'être montés de façon déplaçable, **caractérisé en ce que** la fixation (10 ; 100) comprend un support (11 ; 111), en particulier du genre d'une colonne, sur lequel les modules de cuisson (20 à 25 ; 120 à 123) peuvent être montés de façon librement accessible le long d'au moins deux côtés et par rapport auxquels les modules de cuisson (20 à 25 ; 120 à 123) sont déplaçables et/ou susceptibles d'être pivotés et/ou susceptibles d'être tournés, la fixation (10 ; 110) étant déplaçable, mobile les uns hors des autres et/ou rabattable les uns hors des autres ; et des aliments, placés dans les modules de cuisson (20 à 25 ; 120 à 123), étant susceptibles d'être cuits, stockés, refroidis, transportés et/ou régénérés.

2. Système de cuisson modulaire selon la revendication 1, **caractérisé en ce que** les modules de cuisson (20 à 25 ; 120 à 123), au moins partiellement, sont disposés les uns au-dessus des autres, les uns à côté des autres et/ou les uns derrière les autres, sachant que, de préférence, chaque fois au moins un module de cuisson (20 à 23 ; 120 à 122) est disposé à une hauteur de travail ergonomique pour un opérateur.

3. Système de cuisson modulaire selon la revendication 1 ou 2, **caractérisé en ce qu'**au moins une partie des modules de cuisson (120 à 122) est déplaçable sur un guidage (114), à la manière d'un pater noster, par rapport à une fixation (110).

4. Système de cuisson modulaire selon l'une des revendications précédentes, **caractérisé en ce que** les colonnes sont télescopiques.

5. Système de cuisson modulaire selon l'une des revendications précédentes, **caractérisé par** au moins une hotte d'extraction (12 ; 112), reliée et/ou intégrée dans la fixation (10 ; 110).

6. Système de cuisson modulaire selon l'une des revendications précédentes, **caractérisé en ce que** chaque module de cuisson (20 à 25 ; 120 à 123) est susceptible d'être relié, de préférence verrouillé, par l'intermédiaire d'au moins une liaison à encliquetage, au moins une liaison à enclipsage, au moins une liaison à enfichage, au moins une glissière ou rail, au moins un bras articulé, au moins une broche filetée et/ou au moins un ressort à la fixation (10 ; 110), en particulier d'un guidage (14 ; 114) sur la fixation (10 ; 110).

7. Système de cuisson modulaire selon l'une des revendications précédentes, **caractérisé en ce qu'**au moins une partie des modules de cuisson (20, 21, 23, 24) présente chaque fois un couvercle (26 à 29) pouvant être ouvert ou fermé, de préférence par coulissement ou déplacement le long de la fixation (10).

8. Système de cuisson modulaire selon l'une des revendications précédentes, **caractérisé par** au moins un raccordement pour une conduite d'eau, une conduite de gaz, une ligne électrique, une ligne de données et/ou une ligne téléphonique, à une fixation (10 ; 110), de préférence de la colonne (11 ; 111).

9. Système de cuisson modulaire selon la revendication 8, **caractérisé en ce qu'**au moins une partie des modules de cuisson, lors de l'application sur la fixation, entre automatiquement en liaison fonctionnelle avec au moins un raccordement.

10. Système de cuisson modulaire selon l'une des revendications précédentes, **caractérisé par** au moins une bande de manoeuvre (13 ; 113), au moins une unité de commande et/ou de régulation, au moins une unité d'affichage (13', 113'), au moins une unité d'introduction et/ou au moins une unité d'édition, de préférence intégrée dans la colonne (11 ; 111) et susceptible d'être placée en liaison fonctionnelle avec chaque module de cuisson (20 à 25 ; 120 à 123).
